# EUROPEAN PATENT APPLICATION

(11) **EP 4 550 786 A1**
(43) Date of publication of application: **07.05.2025**
(21) Application number: 23856572.5
(22) Date of filing: 21.08.2023
(51) Int. Cl.: H04N 19/172

(54) **IMAGE PROCESSING METHOD, APPARATUS AND SYSTEM**

(30) Priority: 22.08.2022 CN 202211008622
(71) Applicant: Huawei Technologies Co., Ltd., Shenzhen, Guangdong 518129 (CN)
(72) Inventor: WANG, Xin, Shenzhen, Guangdong 518129 (CN); HUANG, Jing, Shenzhen, Guangdong 518129 (CN); ZHENG, Xiaoxu, Shenzhen, Guangdong 518129 (CN); MI, Michael Bi, Shenzhen, Guangdong 518129 (CN)
(74) Representative: Pfenning, Meinig & Partner mbB
(86) International application number: PCT/CN2023/114021
(87) International publication number: WO 2024/041482

(57) **Abstract**

This application relates to an image processing method, apparatus, and system, and relates to the field of image processing technologies, to improve restoration effect of restoring a downsampled image by using a super-resolution technology. The method includes obtaining image data, where the image data includes a plurality of consecutive first image frames. For different first image frames in the plurality of consecutive first image frames, sampling points in different phases are sampled, so that at least two adjacent second image frames in a plurality of consecutive second image frames obtained through downsampling have different sampling points in same pixel modules. In other words, the plurality of consecutive second image frames include pixel information of different locations of a same object. In this way, when super-resolution processing is subsequently performed, the pixel information that is of different locations of the same object and that is in the plurality of consecutive second image frames can be effectively used to restore the object, to improve restoration effect.

## Description

This application claims priority to Chinese Patent Application No. 202211008622.X, filed with the China National Intellectual Property Administration on August 22, 2022 and entitled "IMAGE PROCESSING METHOD, APPARATUS, AND SYSTEM", which is incorporated herein by reference in its entirety.

### TECHNICAL FIELD

This application relates to the field of image processing technologies, and in particular, to an image processing method, apparatus, and system.

### BACKGROUND

In a communication application, image processing usually includes a series of processes such as compression, transmission, and decompression. Image compression can reduce a bandwidth required for image transmission. In some bandwidth-limited application scenarios, a transmit end usually first performs downsampling on an image, and then compresses and transmits a sub-image obtained through downsampling. After decompression, a receive end reconstructs a decompressed image by using a super-resolution technology.

In the conventional technology, to restore image information lost during downsampling and compression processing at the transmit end, when reconstructing the image by using the super-resolution technology, the receive end usually restores the image information by using correlation between inter-frame pixels and sub-pixel misplacement of an inter-frame moving object. However, in this manner, only information that is of a motion area and that is lost during downsampling and compression can be restored to some extent, and information that is of a static area and that is lost during downsampling and compression cannot be restored. Therefore, restoration effect is poor.

### SUMMARY

This application provides an image processing method, apparatus, and system, to resolve a problem in the conventional technology that restoration effect is poor when a downsampled image is restored by using a super-resolution technology.

To achieve the foregoing objective, the following technical solutions are used in this application.

According to a first aspect, an image processing method is provided, where the method includes: obtaining image data, where the image data may be high-resolution video data, and the image data includes a plurality of consecutive first image frames, or referred to as a plurality of frames of consecutive images; and separately performing downsampling processing on the plurality of consecutive first image frames to obtain a plurality of consecutive second image frames, where the plurality of consecutive second image frames one-to-one correspond to the plurality of consecutive first image frames, at least two adjacent second image frames in the plurality of consecutive second image frames have different sampling points in same pixel modules, and the sampling point may be a pixel or a sub-pixel.

In the foregoing technical solution, when the plurality of consecutive first image frames are obtained, sampling points in different phases may be downsampled for different first image frames in the plurality of consecutive first image frames, so that at least two adjacent second image frames in a plurality of consecutive second image frames obtained through downsampling have different sampling points in same pixel modules, that is, pixel information in different phases in the plurality of consecutive first image frames can be obtained through downsampling processing. Therefore, when super-resolution processing is subsequently performed on the plurality of consecutive second image frames, correlation between pixel information of the plurality of consecutive second image frames can be effectively used to compensate for pixel information lost in a downsampling process of each second image frame, so that there are fewer errors between a plurality of consecutive image frames obtained through restoration and the plurality of original consecutive first image frames. This improves restoration authenticity and achieves better restoration effect.

In a possible implementation of the first aspect, the separately performing downsampling processing on the plurality of consecutive first image frames to obtain a plurality of consecutive second image frames includes: separately performing downsampling processing on the plurality of consecutive first image frames based on at least two preset phases, where each of the plurality of consecutive first image frames corresponds to one of the at least two preset phases, two adjacent first image frames correspond to different preset phases, and one second image frame may be obtained by performing downsampling processing on each first image frame, so that the plurality of consecutive second image frames are correspondingly obtained based on the plurality of consecutive first image frames. In the foregoing possible implementation, sampling points of at least two adjacent second image frames in the plurality of consecutive second image frames obtained through downsampling may have different phases, so that the pixel information in different phases in the plurality of consecutive first image frames is sampled.

In a possible implementation of the first aspect, the separately performing downsampling processing on the plurality of consecutive first image frames to obtain a plurality of consecutive second image frames includes: performing downsampling processing on each of the plurality of consecutive first image frames based on at least two preset phases, to obtain at least two candidate image frames; and selecting one candidate image frame from the at least two candidate image frames corresponding to each of the plurality of consecutive first image frames, to obtain the plurality of consecutive second image frames, where preset phases used for downsampling two candidate image frames correspondingly selected for two adjacent first image frames are different. In the foregoing possible implementation, at least two adjacent second image frames in the plurality of consecutive second image frames obtained through downsampling can have different sampling points in same pixel modules, so that the pixel information in different phases in the plurality of consecutive first image frames is sampled.

In a possible implementation of the first aspect, the separately performing downsampling processing on the plurality of consecutive first image frames to obtain a plurality of consecutive second image frames includes: performing downsampling processing on the plurality of consecutive first image frames by using a downsampling network, to obtain the plurality of consecutive second image frames, where the downsampling network is obtained through training. In the foregoing possible implementation, downsampling processing is performed on the plurality of consecutive first image frames by using the downsampling network, so that accuracy and processing efficiency of downsampling processing can be improved. This ensures that when super-resolution processing is subsequently performed on the plurality of consecutive second image frames, authenticity of the plurality of image frames obtained through restoration is improved, and ensures restoration effect.

In a possible implementation of the first aspect, the method further includes: performing downsampling training on a plurality of training image frames to obtain a plurality of sampling image frames, where at least two adjacent sampling image frames in the plurality of sampling image frames have different sampling points in same pixel modules; performing super-resolution training on the plurality of sampling image frames to obtain a plurality of training restoration image frames; and determining the downsampling network based on the plurality of training restoration image frames and the plurality of training image frames. In the foregoing possible implementation, when the downsampling network is trained, encoding and decoding operations are not considered first, but downsampling training and super-resolution training are directly performed based on the plurality of training image frames, to obtain the downsampling network. This ensures that the downsampling network obtained through training has good performance.

In a possible implementation of the first aspect, the method further includes: encoding the plurality of consecutive second image frames to obtain image encoding data. In the foregoing possible implementation, the plurality of consecutive second image frames are encoded, so that transmission efficiency of the plurality of consecutive second image frames can be improved, and space occupied during storage can be reduced.

According to a second aspect, an image processing method is provided, where the method includes: obtaining a plurality of consecutive second image frames, where the plurality of consecutive second image frames are obtained by separately downsampling a plurality of consecutive first image frames, the plurality of consecutive second image frames one-to-one correspond to the plurality of consecutive first image frames, at least two adjacent second image frames in the plurality of consecutive second image frames have different sampling points in same pixel modules, and the sampling point is a pixel or a sub-pixel; and performing super-resolution processing on the plurality of consecutive second image frames to obtain a plurality of consecutive third image frames, where the plurality of consecutive second image frames one-to-one correspond to the plurality of consecutive third image frames.

In the foregoing technical solution, the plurality of consecutive second image frames are obtained, and at least two adjacent second image frames in the plurality of consecutive second image frames have different sampling points in same pixel modules, that is, the plurality of consecutive second image frames include pixel information in different phases of a same object. Therefore, when super-resolution processing is performed on the plurality of consecutive second image frames, correlation between pixel information of the plurality of consecutive second image frames can be effectively used to compensate for pixel information lost in a downsampling process of each second image frame, so that there are fewer errors between the plurality of image frames obtained through restoration and the original image frames. This improves restoration authenticity and achieves better restoration effect.

In a possible implementation of the second aspect, the obtaining a plurality of consecutive second image frames includes: obtaining image encoding data, and decoding the image encoding data to obtain the plurality of consecutive second image frames. In the foregoing possible implementation, the plurality of consecutive second image frames are encoded, so that transmission efficiency of the plurality of consecutive second image frames can be improved, and space occupied during storage can be reduced.

In a possible implementation of the second aspect, the performing super-resolution processing on the plurality of consecutive second image frames to obtain a plurality of consecutive third image frames includes: performing super-resolution processing on the plurality of consecutive second image frames by using a super-resolution network, to obtain the plurality of consecutive third image frames. In the foregoing possible implementation, super-resolution processing is performed on the plurality of consecutive second image frames by using the super-resolution network, so that accuracy and processing efficiency of super-resolution processing can be improved. This ensures that authenticity of the plurality of image frames obtained through restoration is improved, and ensures restoration effect.

In a possible implementation of the second aspect, the method further includes: performing super-resolution training on a plurality of degraded sampling image frames to obtain the super-resolution network, where the plurality of degraded sampling image frames are obtained by performing encoding and decoding processing on a plurality of sampling image frames, and the plurality of sampling image frames are obtained by performing downsampling processing on a plurality of training image frames by using a downsampling network. In the foregoing possible implementation, during training of the super-resolution network, downsampling training and super-resolution training are first performed based on the plurality of training image frames, to obtain the downsampling network. The downsampling network is fixed, codec degradation is performed on a sampling image frame output by the downsampling network, and super-resolution training is performed by using a degraded sampling image frame, to obtain the super-resolution network. In this way, complete end-to-end training from downsampling to super-resolution is implemented, and it is ensured that the downsampling network and the super-resolution network obtained through training have good performance.

According to a third aspect, an image processing apparatus is provided, where the apparatus includes: an obtaining unit, configured to obtain image data, where the image data includes a plurality of consecutive first image frames; and a downsampling unit, configured to separately perform downsampling processing on the plurality of consecutive first image frames to obtain a plurality of consecutive second image frames, where the plurality of consecutive second image frames one-to-one correspond to the plurality of consecutive first image frames, at least two adjacent second image frames in the plurality of consecutive second image frames have different sampling points in same pixel modules, and the sampling point is a pixel or a sub-pixel.

In a possible implementation of the third aspect, the downsampling unit is further configured to: separately perform downsampling processing on the plurality of consecutive first image frames based on at least two preset phases, where each of the plurality of consecutive first image frames corresponds to one of the at least two preset phases, two adjacent first image frames correspond to different preset phases, and the plurality of consecutive second image frames are correspondingly obtained based on the plurality of consecutive first image frames.

In a possible implementation of the third aspect, the downsampling unit is further configured to: perform downsampling processing on each of the plurality of consecutive first image frames based on at least two preset phases, to obtain at least two candidate image frames; and select one candidate image frame from the at least two candidate image frames corresponding to each of the plurality of consecutive first image frames, to obtain the plurality of consecutive second image frames, where preset phases used for downsampling two candidate image frames correspondingly selected for two adjacent first image frames are different.

In a possible implementation of the third aspect, the downsampling unit is further configured to perform downsampling processing on the plurality of consecutive first image frames by using a downsampling network, to obtain the plurality of consecutive second image frames, where the downsampling network is obtained through training.

In a possible implementation of the third aspect, the apparatus further includes a training unit, configured to: perform downsampling training on a plurality of training image frames to obtain a plurality of sampling image frames, where at least two adjacent sampling image frames in the plurality of sampling image frames have different sampling points in same pixel modules; perform super-resolution training on the plurality of sampling image frames to obtain a plurality of training restoration image frames; and determine the downsampling network based on the plurality of training restoration image frames and the plurality of training image frames.

In a possible implementation of the third aspect, the apparatus further includes: an encoding unit, configured to encode the plurality of consecutive second image frames to obtain image encoding data.

According to a fourth aspect, an image processing apparatus is provided, where the apparatus includes: an obtaining unit, configured to obtain a plurality of consecutive second image frames, where the plurality of consecutive second image frames are obtained by downsampling a plurality of consecutive first image frames, at least two adjacent second image frames in the plurality of second image frames have different sampling points in same pixel modules, and the sampling point is a pixel or a sub-pixel; and a super-resolution unit, configured to perform super-resolution processing on the plurality of consecutive second image frames to obtain a plurality of consecutive third image frames, where the plurality of consecutive second image frames one-to-one correspond to the plurality of consecutive third image frames.

In a possible implementation of the fourth aspect, the apparatus further includes a decoding unit, where the obtaining unit is further configured to obtain image encoding data; and the decoding unit is configured to decode the image encoding data to obtain the plurality of consecutive second image frames.

In a possible implementation of the fourth aspect, the super-resolution unit is further configured to perform super-resolution processing on the plurality of consecutive second image frames by using a super-resolution network, to obtain the plurality of consecutive third image frames.

In a possible implementation of the fourth aspect, the apparatus further includes a training unit, configured to perform super-resolution training on a plurality of degraded sampling image frames to obtain the super-resolution network, where the plurality of degraded sampling image frames are obtained by performing encoding and decoding processing on a plurality of sampling image frames, and the plurality of sampling image frames are obtained by performing downsampling processing on a plurality of training image frames by using a downsampling network.

According to still another aspect of this application, an image processing system is provided, where the image processing system includes any image processing apparatus provided in the third aspect or any possible implementation of the third aspect, and any image processing apparatus provided in the fourth aspect or any possible implementation of the fourth aspect.

According to still another aspect of this application, an image processing system is provided, where the image processing system includes a processor and a memory. The memory stores instructions, and when the instructions are executed, the image processing system is enabled to perform the image processing method provided in the first aspect or any possible implementation of the first aspect.

According to still another aspect of this application, a computer-readable storage medium is provided. The computer-readable storage medium stores a computer program or instructions. When the computer program or the instructions is/are run, the image processing method provided in the first aspect or any possible implementation of the first aspect is implemented.

According to still another aspect of this application, a computer program product is provided. When the computer program product runs on a computer, the computer is enabled to perform the image processing method provided in the first aspect or any possible implementation of the first aspect.

It may be understood that the apparatus, the system, the computer storage medium, or the computer program product of any image processing method described above is used to perform the corresponding method described above. Therefore, for beneficial effect that can be achieved by the apparatus, the system, the computer storage medium, or the computer program product, refer to the beneficial effect in the corresponding method described above. Details are not described herein.

### BRIEF DESCRIPTION OF DRAWINGS

FIG. 1 is a diagram of a structure of an image processing system according to an embodiment of this application;
FIG. 2 is a diagram of a structure of another image processing system according to an embodiment of this application;
FIG. 3 is a flowchart of an image processing method according to an embodiment of this application;
FIG. 4 is a diagram of downsampling according to an embodiment of this application;
FIG. 5 is a diagram of other downsampling according to an embodiment of this application;
FIG. 6 is a flowchart of another image processing method according to an embodiment of this application;
FIG. 7 is a diagram of processing a plurality of image frames by an image processing system according to an embodiment of this application;
FIG. 8 is a diagram of processing a plurality of image frames by another image processing system according to an embodiment of this application;
FIG. 9 is a diagram of training a downsampling network according to an embodiment of this application;
FIG. 10 is a diagram of training a super-resolution network according to an embodiment of this application;
FIG. 11 is a diagram of a structure of an image processing apparatus according to an embodiment of this application; and
FIG. 12 is a diagram of a structure of another image processing apparatus according to an embodiment of this application.

### DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. A character "/" usually indicates an "or" relationship between the associated objects. In addition, in embodiments of this application, terms such as "first" and "second" do not limit a quantity or an execution sequence.

It should be noted that, in this application, terms such as "an example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

The technical solutions provided in this application may be applied to a plurality of different image processing systems. The image processing system may be an image encoding and decoding system, an image storage system, a video photographing system (for example, a security protection system), or the like. In an actual application, the image processing system may be one electronic device, or may include a plurality of electronic devices. The electronic device includes but is not limited to a mobile phone, a tablet computer, a computer, a notebook computer, a video camera, a camera, a wearable device, an in-vehicle device, a terminal device, or the like. In embodiments of this application, the image processing system may be configured to perform downsampling processing on a high-resolution image frame, and may be further configured to perform at least one of the following processing: performing encoding, noise reduction, deblurring processing, or the like on an image frame obtained through downsampling, storing processed image data, performing decoding processing on the image data, and performing super-resolution processing on a low-resolution image frame, and the like. The following describes a specific structure of the image processing system by using an example.

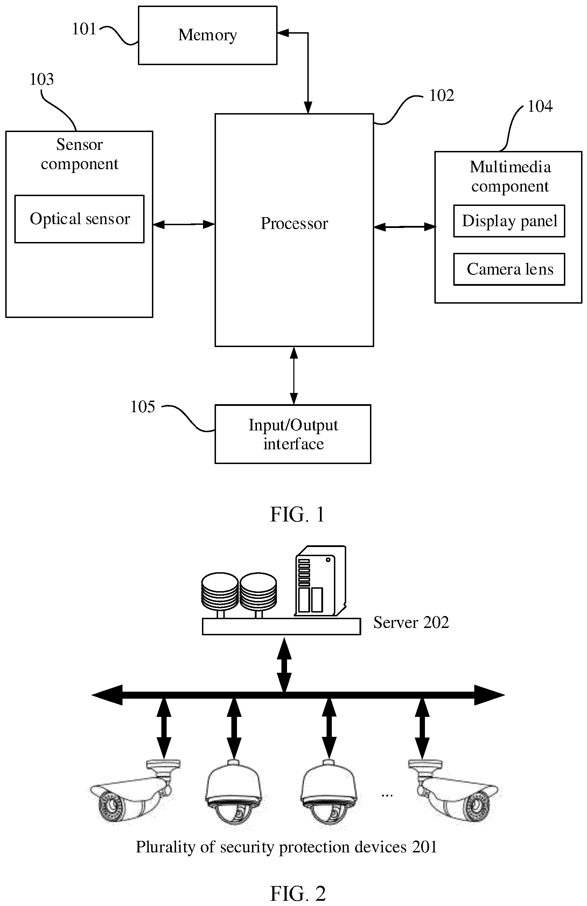

FIG. 1 is a diagram of a structure of an image processing system according to an embodiment of this application. The image processing system is described by using a mobile phone as an example. The mobile phone or a chip system built in a mobile phone includes a memory 101, a processor 102, a sensor component 103, a multimedia component 104, and an input/output interface 105. The following specifically describes components of the mobile phone or the chip system built in the mobile phone with reference to FIG. 1.

The memory 101 may be configured to store data, a software program, and a module. The memory 101 mainly includes a program storage area and a data storage area. The program storage area may store a software program that includes instructions including code, and including but not limited to an operating system, and an application required by at least one function, for example, a sound playback function and an image playback function. The data storage area may store data created based on use of the mobile phone, for example, audio data, image data, and a phone book. In this embodiment of this application, the memory 101 may be configured to store a face image, an illumination information database, a to-be-evaluated image, and the like. In some feasible embodiments, there may be one memory, or there may be a plurality of memories. The memory may include a floppy disk, a hard disk like a built-in hard disk and a removable hard disk, a magnetic disk, an optical disc, a magneto-optical disc like a CD-ROM and a DCD-ROM, a nonvolatile storage device like a RAM, a ROM, a PROM, an EPROM, an EEPROM, and a flash memory, or any other form of storage medium known in the art.

The processor 102 is a control center of the mobile phone, connects parts of the entire device through various interfaces and lines, and performs various functions of the mobile phone and data processing by running or executing the software program and/or the software module that are/is stored in the memory 101 and invoking data stored in the memory 101, to perform overall monitoring on the mobile phone. In this embodiment of this application, the processor 102 may be configured to perform one or more steps in the method embodiments of this application. For example, the processor 102 may be configured to perform one or more steps in S202 to S204 in the following method embodiments. In some feasible embodiments, the processor 102 may be a single-processor structure, a multiprocessor structure, a single-thread processor, a multi-thread processor, or the like. In some feasible embodiments, the processor 102 may include at least one of a central processing unit, a general purpose processor, a digital signal processor, a neural network processor, an image processing unit, an image signal processor, a microcontroller, a microprocessor, or the like. In addition, the processor 102 may further include another hardware circuit or accelerator, for example, an application-specific integrated circuit, a field programmable gate array or another programmable logic device, a transistor logic device, a hardware component, or any combination thereof. The processor 102 may implement or execute various example logical blocks, modules, and circuits described with reference to content disclosed in this application. Alternatively, the processor 102 may be a combination of processors implementing a computing function, for example, a combination including one or more microprocessors, or a combination of a digital signal processor and a microprocessor.

The sensor component 103 includes one or more sensors, configured to provide status evaluation in various aspects for the mobile phone. The sensor component 103 may include an optical sensor, for example, a CMOS or CCD image sensor, configured to be used in an imaging application, that is, become a part of a camera or a camera lens. In embodiments of this application, the sensor component 103 may be configured to support a camera in the multimedia component 104 to obtain a face image and the like. In addition, the sensor component 103 may further include an acceleration sensor, a gyroscope sensor, a magnetic sensor, a pressure sensor, or a temperature sensor. The sensor component 103 may detect acceleration/deceleration, an orientation, and an on/off state that are of the mobile phone, relative positioning of the component, a temperature change of the mobile phone, or the like.

The multimedia component 104 provides a screen of an output interface between the mobile phone and a user. The screen may be a touch panel. When the screen is the touch panel, the screen may be implemented as a touchscreen to receive an input signal from the user. The touch panel includes one or more touch sensors to sense touch, slide, and a gesture on the touch panel. The touch sensor may not only sense a boundary of a touch or slide action, but also detect duration and pressure related to the touch or slide operation. In addition, the multimedia component 104 further includes at least one camera. For example, the multimedia component 104 includes a front-facing camera lens and/or a rear-facing camera lens. When the mobile phone is in an operation mode, for example, a shooting mode or a video mode, the front-facing camera lens and/or the rear-facing camera lens may sense an external multimedia signal, and the signal is used to form an image frame. Each front-facing camera lens and each rear-facing camera lens may be a fixed optical lens system or have a focal length and an optical zooming capability.

The input/output interface 105 provides an interface between the processor 102 and a peripheral interface module. For example, the peripheral interface module may include a keyboard, a mouse, or a USB (universal serial bus) device. In a possible implementation, the input/output interface 105 may have only one input/output interface, or may have a plurality of input/output interfaces.

Although not shown, the mobile phone may further include an audio component, a communication component, and the like. For example, the audio component includes a microphone, and the communication component includes a wireless fidelity (wireless fidelity, Wi-Fi) module, a Bluetooth module, and the like. Details are not described in embodiments of this application.

FIG. 2 is a diagram of a structure of another image processing system according to an embodiment of this application. The image processing system is described by using a video photographing system as an example. As shown in FIG. 2, the video photographing system includes a plurality of security protection devices (which may also be referred to as edge devices) 201 and a server 202. The plurality of security protection devices 201 and the server 202 may be connected in a wired or wireless manner.

The plurality of security protection devices 201 may be a plurality of video camera devices, and are configured to photograph and process video data, and transmit the video data to the server 202. For example, the plurality of security protection devices 201 may perform downsampling processing on the video data obtained through photographing, and may be further configured to perform one or more of processing like encoding processing, noise reduction processing, deblurring processing, feature extraction, and feature comparison on the video data. In an actual application, the plurality of security protection devices 201 may include various cameras such as a pinhole camera, a semi-dome camera, and an infrared camera, a mobile phone, a tablet computer, or another device having a video photographing function.

The server 202 may be configured to receive and store the video data transmitted by the plurality of security protection devices 201, and perform a function like processing the video data. For example, the server 202 may be configured to perform downsampling processing on the video data, may be further configured to perform super-resolution processing on the video data, and may be further configured to perform one or more of processing like encoding and decoding processing, noise reduction processing, deblurring processing, feature extraction, feature comparison, and image retrieval on the video data. Optionally, the server 202 may be further configured to perform unified management and configuration on the plurality of security protection devices 201. For example, the server 202 may be configured to perform identity authentication on the plurality of security protection devices 201, and transmit a partial processing result of the video data to the plurality of security protection devices 201. In a possible embodiment, the server 202 may be a cloud server in a cloud data center, and the cloud data center may include one or more cloud servers. The cloud data center may be used to provide services such as video sharing, video parsing, and big data applications for users.

Further, the video photographing system may further include a storage device. The storage device may be connected to the server 202 through a bus, and the storage device may be configured to store data related to an image or a video. In a possible embodiment, after the server 202 performs downsampling on the received video data, the server 202 may store the downsampled image data in the storage device. In another possible embodiment, the server 202 may further obtain the image data from the storage apparatus through the bus, and perform super-resolution processing on the image data.

A person skilled in the art may understand that structures of the image processing system shown in FIG. 1 and FIG. 2 do not constitute a limitation on the image processing system, and the image processing system may include more or fewer components than those shown in the figure, or some components are combined, or a different component arrangement may be used.

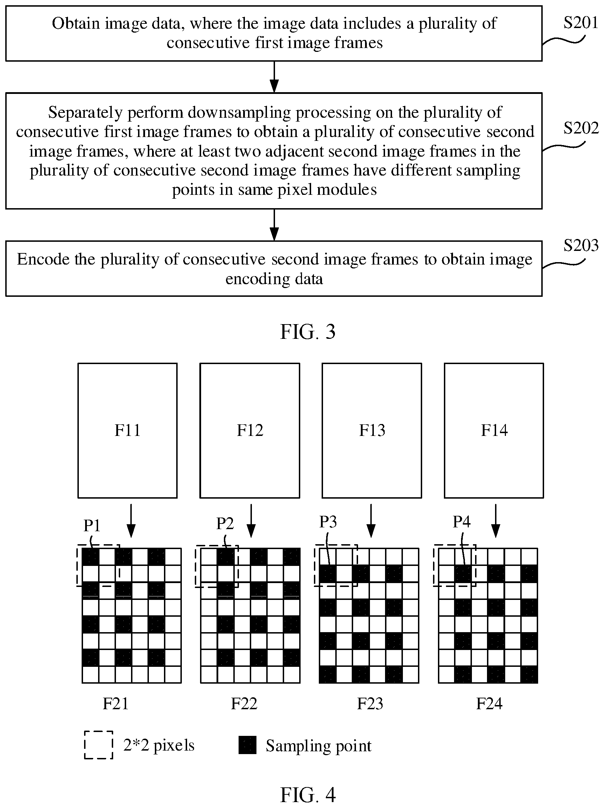

FIG. 3 is a flowchart of an image processing method according to an embodiment of this application. The method may be performed by the image processing system shown in FIG. 1 or FIG. 2. Refer to FIG. 3. The method may include the following steps.

S201: Obtain image data, where the image data includes a plurality of consecutive first image frames.

The image data may be high-resolution video data, and the plurality of consecutive first image frames in the image data may be a plurality of consecutive image frames in the video data, or may be referred to as a plurality of frames of consecutive images. A resolution of each of the plurality of first image frames may be the same. For example, the resolution of each first image frame in the image data may be 1280*720 or 1920*1080.

In a possible embodiment, the image processing system may be a terminal device like a mobile phone, a video camera, or an in-vehicle device. The terminal device may photograph an object in a surrounding environment by using a device like a camera lens or a camera that has an image photographing function, to obtain the image data.

In another possible embodiment, the image processing system may include a server and a security protection device. The security protection device may photograph an object in a surrounding environment by using a camera lens to obtain the image data, and the security protection device performs the following step S202. Alternatively, after obtaining the image data, the security protection device sends the image data to the server in a wired or wireless manner, and the server receives the image data, and performs the following step S202.

S202: Separately perform downsampling processing on the plurality of consecutive first image frames to obtain a plurality of consecutive second image frames, where the plurality of second image frames one-to-one correspond to the plurality of first image frames, and at least two adjacent second image frames in the plurality of consecutive second image frames have different sampling points in same pixel modules.

One second image frame may be obtained by performing downsampling processing on each first image frame, so that the plurality of consecutive second image frames may be obtained by separately performing downsampling processing on the plurality of consecutive first image frames. A quantity of the plurality of consecutive first image frames is equal to a quantity of the plurality of consecutive second image frames. The plurality of consecutive second image frames are obtained by performing downsampling processing on the plurality of consecutive first image frames, so that a resolution of the plurality of consecutive second image frames is less than a resolution of the plurality of consecutive first image frames. For example, the resolution of the plurality of first image frames may be 1920* 1080, and the resolution of the plurality of second image frames may be 640*480.

In addition, the sampling point of the second image frame may be a pixel (pixel) or a sub-pixel (sub-pixel) in the corresponding first image frame, that is, sampling is performed on the pixel or the sub-pixel in the first image frame, to obtain the corresponding second image frame. A phase of the sampling point may be a phase of a sampled pixel or sub-pixel, and the phase may also be understood as a location of the sampled pixel or sub-pixel in the first image frame.

In addition, sampling points of at least two adjacent second image frames in the plurality of second image frames are different in same pixel modules. The at least two adjacent second image frames may be some image frames in the plurality of second image frames, or may be all image frames in the plurality of second image frames. The same pixel modules may be pixel modules located at a same location in different image frames.

For each of the plurality of consecutive first image frames, the image processing system may perform downsampling on the first image frame once, or may perform downsampling on the first image frame for a plurality of times. When the image processing system performs downsampling on the first image frame for the plurality of times, an image frame obtained through one time of the downsampling may be selected as the second image frame. Optionally, each time downsampling is performed, the image processing system may divide the first image frame into a plurality of pixel modules (which may also be referred to as image blocks), and sample pixels or sub-pixels that are in a same area and that are in each of the plurality of pixel modules. For example, each pixel module may include M*N pixels, values of M and N are integers greater than 1 (for example, M=N=2), and one pixel is sampled from the M*N pixels during each time of downsampling.

In a possible implementation, a specific process in which the image processing system performs downsampling on each of the plurality of consecutive first image frames once to obtain the plurality of consecutive second image frames may include: performing downsampling processing on each of the plurality of consecutive first image frames once based on at least two preset phases. Each of the plurality of consecutive first image frames corresponds to one of the at least two preset phases, so that the plurality of consecutive second image frames are obtained by performing downsampling processing on the plurality of consecutive first image frames.

For example, as shown in FIG. 4, it is assumed that the plurality of consecutive first image frames include four consecutive first image frames that are respectively represented as F11 to F14, each pixel module obtained through division includes 2*2 pixels, and the 2*2 pixels respectively correspond to four preset phases P1 to P4. The process of downsampling processing may include: downsampling a pixel corresponding to the preset phase P1 in the first image frame F11, to correspondingly obtain a second image frame F21; downsampling a pixel corresponding to the preset phase P2 in the first image frame F12, to correspondingly obtain a second image frame F22; downsampling a pixel corresponding to the preset phase P3 in the first image frame F13, to correspondingly obtain a second image frame F23; and downsampling a pixel corresponding to the preset phase P4 in the first image frame F14, to correspondingly obtain a second image frame F24. The foregoing four preset phases P1 to P4 are described by using an example in which a pixel module includes 2*2 pixels, and a pixel at a different location in the pixel module corresponds to one phase.

In the foregoing example, when each of the plurality of consecutive first image frames corresponds to one of the at least two preset phases, a correspondence between the plurality of consecutive first image frames and the at least two preset phases may be random or preset. This is not specifically limited in embodiments of this application.

In another possible implementation, a specific process in which the image processing system may perform downsampling on each of the plurality of consecutive first image frames for the plurality of times, to obtain the plurality of consecutive second image frames may include: performing downsampling processing on each of the plurality of consecutive first image frames based on at least two preset phases, to obtain at least two candidate image frames; and selecting one candidate image frame from the at least two candidate image frames corresponding to each of the plurality of first image frames, to obtain the plurality of consecutive second image frames, where preset phases used for downsampling two candidate image frames correspondingly selected for two adjacent first image frames are different.

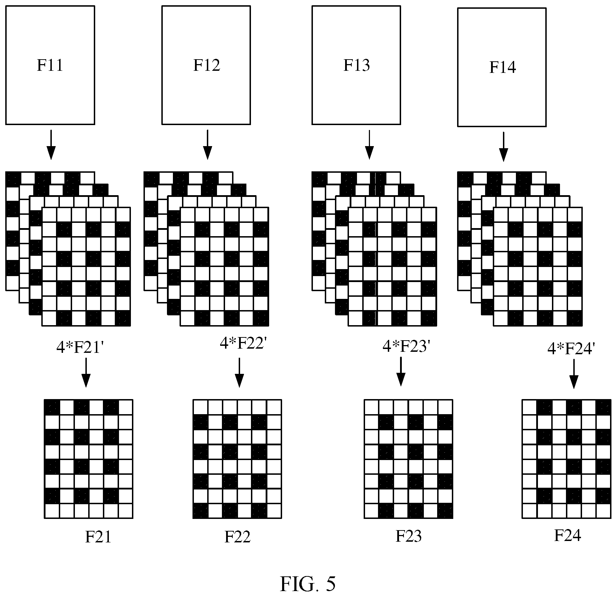

For example, as shown in FIG. 5, it is assumed that the plurality of consecutive first image frames include four consecutive first image frames that are respectively represented as F11 to F14, each pixel module obtained through division includes 2*2 pixels, and the 2*2 pixels respectively correspond to four preset phases P1 to P4. The process of downsampling processing may include: separately downsampling pixels corresponding to the preset phases P1 to P4 in the first image frame F11, to obtain four candidate image frames 4*F21' corresponding to F11; separately downsampling pixels corresponding to the preset phases P1 to P4 in the second image frame F12, to obtain four candidate image frames 4*F22' corresponding to F12; separately downsampling pixels corresponding to the preset phases P1 to P4 in the first image frame F13, to obtain four candidate image frames 4*F23' corresponding to F13; separately downsampling pixels corresponding to the preset phases P1 to P4 in the first image frame F14, to obtain four candidate image frames 4*F24' corresponding to F14; and selecting one candidate image frame from four candidate image frames corresponding to each first image frame in F11 to F14, to obtain four consecutive second image frames F21 to F24.

In the foregoing example, when one candidate image frame is selected from the at least two candidate image frames corresponding to each first image frame as the corresponding second image frame, the candidate image frame may be randomly selected, or may be selected according to a preset rule. This is not specifically limited in embodiments of this application.

Further, the image processing system may perform downsampling processing on the plurality of consecutive first image frames by using a downsampling network, to obtain the plurality of consecutive second image frames. The downsampling network may perform downsampling in any one of the foregoing possible implementations. This is not specifically limited in embodiments of this application. The downsampling network may be obtained by training a plurality of training images through deep learning.

In a possible embodiment, the downsampling network may include a spatial to depth (spatial to depth, S2D) layer, a fusion layer, a convolutional layer, and a dimension reduction layer. The S2D conversion layer may be used to perform downsampling on pixels or sub-pixels of each first image frame based on at least two preset phases, to obtain at least two candidate image frames corresponding to each first image frame. The fusion layer may be used to overlap and fuse all candidate image frames corresponding to the plurality of consecutive first image frames, to obtain fused image data. The convolutional layer may be configured to perform a convolution operation on the fused image data. The dimension reduction layer may be used to perform dimension reduction processing on the fused image data obtained through the convolution operation, to output the plurality of second image frames.

In an actual application, the S2D layer may be implemented by a pixel shuffler (pixel shuffler) in a deep learning algorithm, the fusion layer may be implemented by a concatenation operator (concat) in the deep learning algorithm, the convolutional layer may be implemented by a convolution (convolution) operator in the deep learning algorithm, and the dimension reduction layer may be implemented by a dimension reduction operator in the deep learning algorithm.

In an embodiment of this application, for different first image frames in the plurality of consecutive first image frames, sampling points in different phases may be sampled, so that sampling points in the plurality of consecutive second image frames obtained through downsampling have different phases. In this way, for a static object and a dynamic object in the plurality of consecutive first image frames, the plurality of consecutive second image frames obtained through sampling include pixel information of different locations of the static object and the dynamic object. Therefore, when super-resolution processing is subsequently performed, pixel information of different locations of a same object in the plurality of consecutive second image frames can be effectively used to restore the object, to ensure better effect of obtaining an image frame through restoration.

S203: Encode the plurality of consecutive second image frames to obtain image encoding data.

Encoding the plurality of consecutive second image frames may also be referred to as performing compression or compression encoding on the plurality of consecutive second image frames. Specifically, when the plurality of consecutive second image frames are obtained, the image processing system may perform compression encoding on the plurality of consecutive second image frames according to a specific encoding standard, to obtain the image encoding data. For example, the image processing system may perform compression encoding on the plurality of consecutive second image frames according to an encoding standard H265 or H364.

In a possible embodiment, the image processing system may not encode the plurality of consecutive second image frames, but perform other processing like denoising or deblurring on the plurality of consecutive second image frames, or encode only the plurality of consecutive second image frames, and perform denoising, deblurring, or the like. This is not specifically limited in embodiments of this application. For detailed descriptions of performing processing like encoding, denoising, and deblurring on the plurality of consecutive second image frames, refer to descriptions in a related technology. Details are not described in embodiments of this application again.

Optionally, when the image processing system is a terminal device, the image processing system may include a memory. When the image processing system is a video photographing system, the image processing system may include a storage device. After the image processing system encodes the plurality of consecutive second image frames to obtain the image encoding data, the image proces sing system may store the image encoding data in a memory or a storage device.

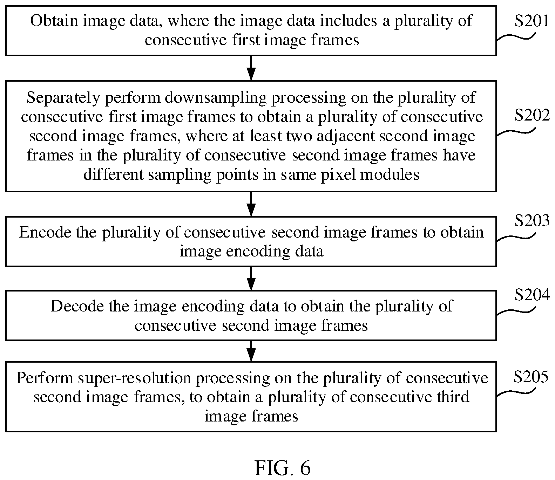

Further, as shown in FIG. 6, after S203, the method may further include S204 and S205.

S204: Decode the image encoding data to obtain the plurality of consecutive second image frames.

When the image processing system needs to play high-resolution image data corresponding to the image encoding data, the image processing system may obtain the image encoding data from the memory or the storage device, and perform decoding in a decoding scheme corresponding to an encoding scheme of the image encoding data, to obtain the plurality of consecutive second image frames.

S205: Perform super-resolution processing on the plurality of consecutive second image frames, to obtain a plurality of consecutive third image frames.

When obtaining the plurality of consecutive second image frames, the image processing system may perform super-resolution processing on the plurality of consecutive second image frames, to compensate, by using correlation between pixels or sub-pixels of the plurality of consecutive second image frames, for pixel information lost in a downsampling process of each second image frame, to obtain the plurality of high-resolution consecutive third image frames.

In a possible embodiment, the image processing system may perform super-resolution processing on the plurality of consecutive second image frames by using a super-resolution network, to obtain the plurality of consecutive third image frames. The super-resolution network may be obtained by performing, by using the deep learning algorithm, super-resolution training on a plurality of sampling images obtained through downsampling, and the plurality of sampling images may be obtained by performing downsampling processing on the plurality of training images by the downsampling network.

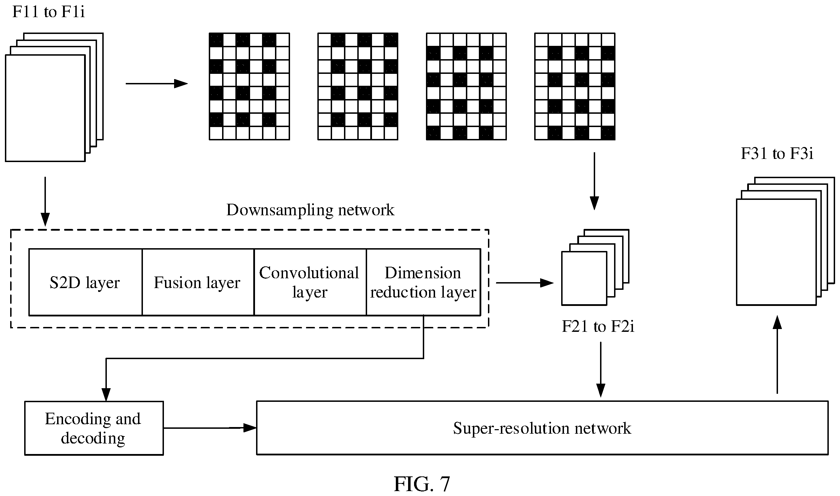

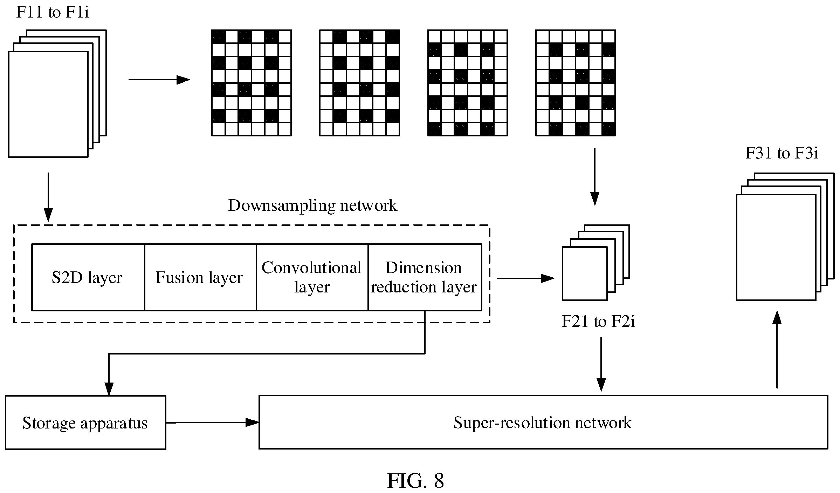

It should be noted that the method embodiments provided in FIG. 3 and FIG. 6 are merely examples. In an actual application, the image processing method may not include steps S203 and S204. In other words, in an image processing process, encoding processing may not be performed on the plurality of consecutive second image frames obtained through downsampling, and correspondingly, an operation of decoding the image encoding data may not be performed before the super-resolution processing. For ease of understanding, the following uses image processing systems shown in FIG. 7 and FIG. 8 as examples to describe the technical solutions provided in embodiments of this application.

For example, as shown in FIG. 7, the image processing system may include a downsampling network, an encoding/decoding module, and a super-resolution network. A corresponding image processing method may include: when the image processing system obtains a plurality of consecutive first image frames F11 to F1i (i is an integer greater than 1), performing downsampling processing on the plurality of consecutive first image frames F11 to F1i by using the downsampling network, to obtain a plurality of consecutive second image frames F21 to F2i, where two adjacent second image frames in the plurality of consecutive second image frames F21 to F2i have different sampling points in same pixel modules; performing encoding processing on the plurality of consecutive second image frames F21 to F2i by using the encoding/decoding module, and then performing decoding processing on image encoding data obtained through encoding, to obtain the plurality of consecutive second image frames F21 to F2i; and performing super-resolution processing on the plurality of consecutive second image frames F21 to F2i by using the super-resolution network, to obtain a plurality of consecutive third image frames F31 to F3i.

For example, as shown in FIG. 8, the image processing system may include a downsampling network, a storage device, and a super-resolution network. A corresponding image processing method may include: when the image processing system obtains a plurality of consecutive first image frames F11 to F1i (i is an integer greater than 1), performing downsampling processing on the plurality of consecutive first image frames F11 to F1i by using the downsampling network, to obtain a plurality of consecutive second image frames F21 to F2i, where two adjacent second image frames in the plurality of consecutive second image frames F21 to F2i have different sampling points in same pixel modules; storing the plurality of consecutive second image frames F21 to F2i in the storage apparatus; and obtaining the plurality of consecutive second image frames F21 to F2i from the storage apparatus, and performing super-resolution processing on the plurality of consecutive second image frames F21 to F2i by using the super-resolution network, to obtain a plurality of consecutive third image frames F31 to F3i.

In embodiments of this application, when the plurality of consecutive first image frames are obtained, sampling points in different phases may be downsampled for different first image frames in the plurality of consecutive first image frames, so that at least two adjacent second image frames in a plurality of consecutive second image frames obtained through downsampling have different sampling points in same pixel modules, that is, pixel information in different phases in the plurality of consecutive first image frames can be obtained through downsampling processing. Therefore, when super-resolution processing is performed on the plurality of consecutive second image frames, correlation between pixel information of the plurality of consecutive second image frames can be effectively used to compensate for pixel information that is of a static object (for example, a leaf, a house, a warning sign, and the like) and/or a dynamic object (for example, a license plate of a moving vehicle) and that is lost in a downsampling process of each second image frame, so that there are fewer errors between a plurality of consecutive third image frames obtained through restoration and the plurality of original consecutive first image frames. This improves restoration authenticity and achieves better restoration effect.

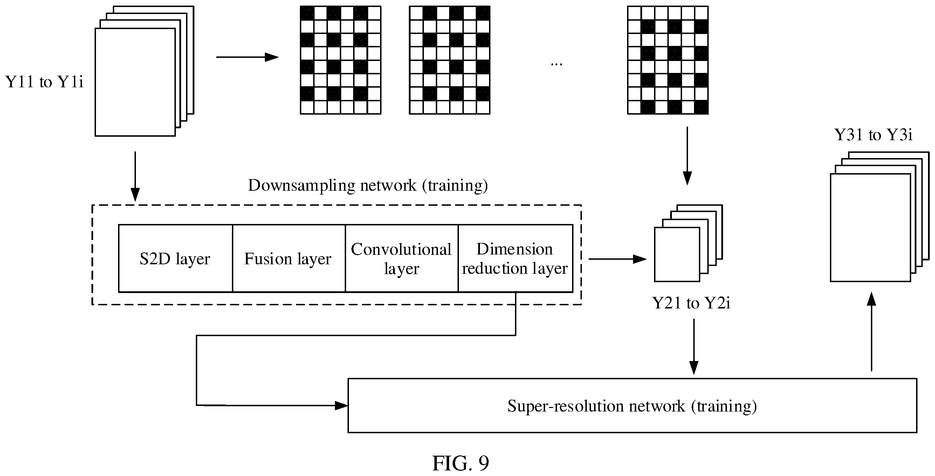

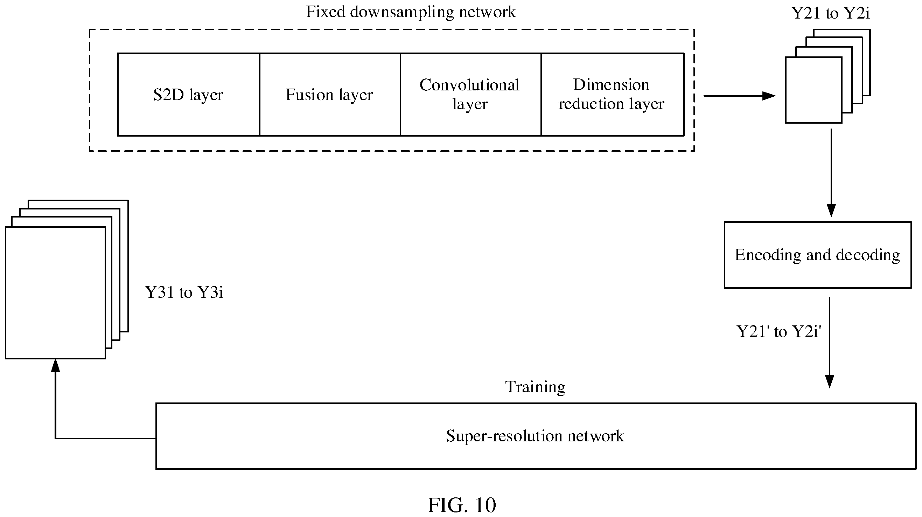

Further, the following uses the image processing system shown in FIG. 7 as an example to describe a process of performing training by using deep learning to obtain the downsampling network and the super-resolution network in embodiments of this application. A process of training the downsampling network and the super-resolution network may include two steps. In the first step, encoding and decoding (or other processing like denoising and deblurring) operations may not be considered, but downsampling training and super-resolution training are performed based on a plurality of training image frames according to a deep learning algorithm, to obtain the downsampling network. In the second step, the downsampling network obtained in the first step may be fixed, codec (or other processing like denoising and deblurring) degradation and other operations may be introduced, and super-resolution training is performed by using a degraded image frame to obtain the super-resolution network. The following describes the two steps in detail with reference to FIG. 9 and FIG. 10.

As shown in FIG. 9, a process of training the downsampling network may include: S11: Train an initial downsampling network based on a plurality of training image frames Y11 to Y1i (i is an integer greater than 1), to obtain a plurality of sampling image frames Y21 to Y2i, where sampling points of at least two sampling image frames in the plurality of sampling image frames Y21 to Y2i have different phases. S12: Train an initial super-resolution network based on the plurality of sampling image frames Y21 to Y2i, to obtain a plurality of training restoration image frames Y31 to Y3i; adjust the initial downsampling network and the initial super-resolution network based on errors between the plurality of training restoration image frames Y31 to Y3i and the plurality of training image frames Y11 to Y1i, and perform S11 and S12 again; and when the errors fall within an acceptable error range, determine the currently obtained downsampling network as a final downsampling network obtained through training.

As shown in FIG. 10, a process of training the super-resolution network may include: S21: Perform codec degradation processing on the plurality of sampling image frames Y21 to Y2i output by the downsampling network obtained through training, that is, encode the plurality of sampling image frames Y21 to Y2i, and then decode encoded image encoding data, to obtain a plurality of degraded sampling image frames Y21' to Y2i'. S22: Train the initial super-resolution network based on the degraded sampling image frames Y21' to Y2i', to obtain the plurality of training restoration image frames Y31 to Y3i. S23: Adjust the initial super-resolution network based on errors between the plurality of training restoration image frames Y31 to Y3i and the plurality of training image frames Y11 to Y1i, and perform S22 (or S21 and S22) again; and when the errors fall within an acceptable error range, determine the currently obtained super-resolution network as a final super-resolution network obtained through training.

In FIG. 7 to FIG. 9, an example in which the downsampling network includes an S2D layer, a fusion layer, a convolutional layer, and a dimension reduction layer is used for description. For specific descriptions of the S2D layer, the fusion layer, the convolutional layer, and the dimension reduction layer, refer to the foregoing descriptions. Details are not described herein again in this embodiment of this application.

In this embodiment of this application, when the downsampling network and the super-resolution network are trained, encoding and decoding operations are not considered first, but downsampling training and super-resolution training are directly performed based on the plurality of training image frames, to obtain the downsampling network. The downsampling network is fixed, codec degradation is performed on the sampling image frame output by the downsampling network, and super-resolution training is performed by using a degraded sampling image frame, to obtain the super-resolution network. In this way, complete end-to-end training from downsampling to encoding and decoding, and to super-resolution is implemented, and it is ensured that the downsampling network and the super-resolution network obtained through training have good performance.

The foregoing mainly describes the image processing method provided in embodiments of this application from a perspective of the image processing system. It may be understood that, to implement the foregoing functions, the image processing system includes corresponding hardware structures and/or software modules for performing the functions. A person skilled in the art should be easily aware that, in combination with the examples described in embodiments disclosed in this specification, structures, algorithms, and steps may be implemented by hardware or a combination of hardware and computer software in this application. Whether a function is performed by hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, functional modules of the image processing apparatus may be obtained through division based on the foregoing method examples. For example, each functional module may be obtained through division in correspondence to each function, or two or more functions may be integrated into one processing module. The integrated module may be implemented in a form of hardware, or may be implemented in a form of software functional module. It should be noted that the module division in embodiments of this application is an example, and is merely logical function division. In actual implementation, there may be another division manner.

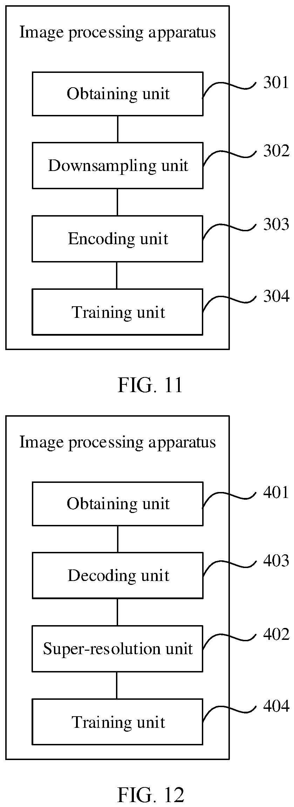

When each function module is obtained through division based on each corresponding function, FIG. 11 is a possible diagram of a structure of an image processing apparatus in the foregoing embodiments. The image processing apparatus includes an obtaining unit 301 and a downsampling unit 302. The obtaining unit 301 is configured to support the apparatus in performing S201 in the method embodiment. The downsampling unit 302 is configured to support the apparatus in performing S202 in the method embodiment. Further, the image processing apparatus may further include an encoding unit 303 and/or a training unit 304. The encoding unit 303 is configured to support the apparatus in performing S203 in the method embodiment. The training unit 304 is configured to support the apparatus in performing the step of training the downsampling network in the method embodiment.

When each function module is obtained through division based on each corresponding function, FIG. 12 is another possible diagram of a structure of an image processing apparatus in the foregoing embodiments. The image processing apparatus includes an obtaining unit 401 and a super-resolution unit 402. The obtaining unit 401 is configured to support the apparatus in performing the step of obtaining the plurality of consecutive second image frames in the method embodiment. The super-resolution unit 402 is configured to support the apparatus in performing S205 in the method embodiment. Further, the image processing apparatus may further include a decoding unit 403 and/or a training unit 404. The decoding unit 403 is configured to support the apparatus in performing S204 in the method embodiment. The training unit 404 is configured to support the apparatus in performing the step of training the super-resolution network in the method embodiment.

The foregoing describes the image processing apparatus in embodiments of this application from a perspective of a modular functional entity. The following describes the image processing apparatus in embodiments of this application from a perspective of hardware processing.

An embodiment of this application further provides an image processing apparatus. A structure of the image processing apparatus may be shown in FIG. 1. In this embodiment of this application, the processor 102 is configured to process one or more steps of S202, S203, S204, and S205 of the image processing method. For example, the processor 102 is configured to: perform downsampling processing on a plurality of consecutive first image frames to obtain a plurality of consecutive second image frames; encode the plurality of consecutive second image frames to obtain image encoding data; decode the image encoding data to obtain the plurality of consecutive second image frames; and perform super-resolution processing on the plurality of consecutive second image frames to obtain a plurality of consecutive third image frames.

In some feasible embodiments, the foregoing information output by the input/output interface 105 may be sent to the memory 101 for storage, or may be sent to another processing procedure for further processing, or an output current frame image and an output next frame image are sent to a display device for display, or sent to a player terminal for playback.

The memory 101 may store the plurality of consecutive first image frames, the plurality of consecutive second image frames, the image encoding data, the plurality of consecutive third image frames, related instructions for configuring the processor, and the like.

The multimedia component 104 may include a camera lens. The processor 102 may control the camera lens to photograph a surrounding environment, to obtain the plurality of first image frames. Therefore, after obtaining the plurality of consecutive first image frames, the processor 102 may perform downsampling processing on the plurality of consecutive first image frames to obtain the plurality of consecutive second image frames, and sequentially perform encoding and decoding, super-resolution processing, and the like on the plurality of consecutive second image frames. Optionally, the multimedia component 104 may further include a display panel, and the processor 102 may further send the plurality of third image frames to the display panel, to display the plurality of third image frames on the display panel.

Components of the image processing apparatus provided in this embodiment of this application are separately configured to implement functions of corresponding steps of the image processing method. Because the steps are described in detail in the foregoing image processing method embodiment, details are not described herein.

Another aspect of this application further provides an image processing system. The image processing system may include the image processing apparatus shown in FIG. 11 and the image processing apparatus provided in FIG. 12. The image processing apparatus shown in FIG. 11 may be configured to support the system in performing one or more steps in S201 to S203 in the foregoing method embodiment. The image processing apparatus provided in FIG. 12 may be configured to support the system in performing one or more steps in S204 and S205 in the foregoing method embodiment.

An embodiment of this application further provides a computer-readable storage medium. The computer-readable storage medium stores instructions. When the instructions are run on a device (for example, the device may be a single-chip microcomputer, a chip, a computer, or a processor), the device is enabled to perform one or more steps in S201 to S205 of the image processing method. When each of the component modules in the foregoing image processing apparatus is implemented in a form of software functional unit and is sold or used as an independent product, the component modules may be stored in the computer-readable storage medium.

Based on such an understanding, an embodiment of this application further provides a computer program product including instructions, and the technical solutions of this application essentially, or the part contributing to the conventional technology, or all or some of the technical solutions may be implemented in a form of software product. The computer software product is stored in a storage medium and includes several instructions for instructing a computer device (which may be a personal computer, a server, a network device, or the like) or a processor of the computer device to perform all or some of the steps of the method described in embodiments of this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image processing method, wherein the method comprises:
obtaining image data, wherein the image data comprises a plurality of consecutive first image frames; and
separately performing downsampling processing on the plurality of consecutive first image frames to obtain a plurality of consecutive second image frames, wherein the plurality of consecutive second image frames one-to-one correspond to the plurality of consecutive first image frames, and at least two adjacent second image frames in the plurality of consecutive second image frames have different sampling points in same pixel modules.

2. The method according to claim 1, wherein the separately performing downsampling processing on the plurality of consecutive first image frames to obtain a plurality of consecutive second image frames comprises:
separately performing downsampling processing on the plurality of consecutive first image frames based on at least two preset phases, wherein each of the plurality of consecutive first image frames corresponds to one of the at least two preset phases, two adjacent first image frames correspond to different preset phases, and the plurality of consecutive second image frames are correspondingly obtained based on the plurality of consecutive first image frames.

3. The method according to claim 1, wherein the separately performing downsampling processing on the plurality of consecutive first image frames to obtain a plurality of consecutive second image frames comprises:
performing downsampling processing on each of the plurality of consecutive first image frames based on at least two preset phases, to obtain at least two candidate image frames; and
selecting one candidate image frame from the at least two candidate image frames corresponding to each of the plurality of consecutive first image frames, to obtain the plurality of consecutive second image frames, wherein preset phases used for downsampling two candidate image frames correspondingly selected for two adjacent first image frames are different.

4. The method according to any one of claims 1 to 3, wherein the sampling point is a pixel or a sub-pixel.

5. The method according to any one of claims 1 to 4, wherein the separately performing downsampling processing on the plurality of consecutive first image frames to obtain a plurality of consecutive second image frames comprises:
performing downsampling processing on the plurality of consecutive first image frames by using a downsampling network, to obtain the plurality of consecutive second image frames, wherein the downsampling network is obtained through training.

6. The method according to claim 5, wherein the method further comprises:
performing downsampling training on a plurality of training image frames to obtain a plurality of sampling image frames, wherein at least two adjacent sampling image frames in the plurality of sampling image frames have different sampling points in same pixel modules;
performing super-resolution training on the plurality of sampling image frames to obtain a plurality of training restoration image frames; and
determining the downsampling network based on the plurality of training restoration image frames and the plurality of training image frames.

7. The method according to any one of claims 1 to 6, wherein the method further comprises:
encoding the plurality of consecutive second image frames to obtain image encoding data.

8. An image processing method, wherein the method comprises:
obtaining a plurality of consecutive second image frames, wherein the plurality of consecutive second image frames are obtained by separately downsampling a plurality of consecutive first image frames, the plurality of consecutive second image frames one-to-one correspond to the plurality of consecutive first image frames, and at least two adjacent second image frames in the plurality of consecutive second image frames have different sampling points in same pixel modules; and
performing super-resolution processing on the plurality of consecutive second image frames to obtain a plurality of consecutive third image frames, wherein the plurality of consecutive second image frames one-to-one correspond to the plurality of consecutive third image frames.

9. The method according to claim 8, wherein the obtaining a plurality of consecutive second image frames comprises:
obtaining image encoding data, and decoding the image encoding data to obtain the plurality of consecutive second image frames.

10. The method according to claim 9, wherein the performing super-resolution processing on the plurality of consecutive second image frames to obtain a plurality of consecutive third image frames comprises:
performing super-resolution processing on the plurality of consecutive second image frames by using a super-resolution network, to obtain the plurality of consecutive third image frames.

11. The method according to claim 10, wherein the method further comprises:
performing super-resolution training on a plurality of degraded sampling image frames to obtain the super-resolution network, wherein
the plurality of degraded sampling image frames are obtained by performing encoding and decoding processing on a plurality of sampling image frames, and the plurality of sampling image frames are obtained by performing downsampling processing on a plurality of training image frames by using a downsampling network.

12. The method according to any one of claims 8 to 11, wherein the sampling point is a pixel or a sub-pixel.

13. An image processing apparatus, wherein the apparatus comprises:
an obtaining unit, configured to obtain image data, wherein the image data comprises a plurality of consecutive first image frames; and
a downsampling unit, configured to separately perform downsampling processing on the plurality of consecutive first image frames to obtain a plurality of consecutive second image frames, wherein the plurality of consecutive second image frames one-to-one correspond to the plurality of consecutive first image frames, and at least two adjacent second image frames in the plurality of consecutive second image frames have different sampling points in same pixel modules.

14. The apparatus according to claim 13, wherein the downsampling unit is further configured to:
separately perform downsampling processing on the plurality of consecutive first image frames based on at least two preset phases, wherein each of the plurality of consecutive first image frames corresponds to one of the at least two preset phases, two adjacent first image frames correspond to different preset phases, and the plurality of consecutive second image frames are correspondingly obtained based on the plurality of consecutive first image frames.

15. The apparatus according to claim 13, wherein the downsampling unit is further configured to:
perform downsampling processing on each of the plurality of consecutive first image frames based on at least two preset phases, to obtain at least two candidate image frames; and
select one candidate image frame from the at least two candidate image frames corresponding to each of the plurality of consecutive first image frames, to obtain the plurality of consecutive second image frames, wherein preset phases used for downsampling two candidate image frames correspondingly selected for two adjacent first image frames are different.

16. The apparatus according to any one of claims 13 to 15, wherein the sampling point is a pixel or a sub-pixel.

17. The apparatus according to any one of claims 13 to 16, wherein the downsampling unit is further configured to:
perform downsampling processing on the plurality of consecutive first image frames by using a downsampling network, to obtain the plurality of consecutive second image frames, wherein the downsampling network is obtained through training.

18. The apparatus according to claim 17, wherein the apparatus further comprises:
a training unit, configured to: perform downsampling training on a plurality of training image frames to obtain a plurality of sampling image frames, wherein at least two adjacent sampling image frames in the plurality of sampling image frames have different sampling points in same pixel modules; perform super-resolution training on the plurality of sampling image frames to obtain a plurality of training restoration image frames; and determine the downsampling network based on the plurality of training restoration image frames and the plurality of training image frames.

19. The apparatus according to any one of claims 13 to 18, wherein the apparatus further comprises:
an encoding unit, configured to encode the plurality of consecutive second image frames to obtain image encoding data.

20. An image processing apparatus, wherein the apparatus comprises:
an obtaining unit, configured to obtain a plurality of consecutive second image frames, wherein the plurality of consecutive second image frames are obtained by separately downsampling a plurality of consecutive first image frames, the plurality of consecutive second image frames one-to-one correspond to the plurality of consecutive first image frames, and at least two adjacent second image frames in the plurality of consecutive second image frames have different sampling points in same pixel modules; and
a super-resolution unit, configured to perform super-resolution processing on the plurality of consecutive second image frames to obtain a plurality of consecutive third image frames, wherein the plurality of consecutive second image frames one-to-one correspond to the plurality of consecutive third image frames.

21. The apparatus according to claim 20, wherein the apparatus further comprises a decoding unit, wherein
the obtaining unit is further configured to obtain image encoding data; and
the decoding unit is configured to decode the image encoding data to obtain the plurality of consecutive second image frames.

22. The apparatus according to claim 21, wherein the super-resolution unit is further configured to:
perform super-resolution processing on the plurality of consecutive second image frames by using a super-resolution network, to obtain the plurality of consecutive third image frames.

23. The apparatus according to claim 22, wherein the apparatus further comprises:
a training unit, configured to perform super-resolution training on a plurality of degraded sampling image frames to obtain the super-resolution network, wherein
the plurality of degraded sampling image frames are obtained by performing encoding and decoding processing on a plurality of sampling image frames, and the plurality of sampling image frames are obtained by performing downsampling processing on a plurality of training image frames by using a downsampling network.

24. The apparatus according to any one of claims 20 to 23, wherein the sampling point is a pixel or a sub-pixel.

25. An image processing system, wherein the image processing system comprises the image processing apparatus according to any one of claims 13 to 19 and the image processing apparatus according to any one of claims 20 to 24.

26. An image processing system, wherein the image processing system comprises a processor and a memory, the memory stores instructions, and when the instructions are executed, the image processing system is enabled to perform the image processing method according to any one of claims 1 to 12.

27. A computer-readable storage medium, wherein the computer-readable storage medium stores a computer program or instructions, and when the computer program or the instructions are run, the image processing method according to any one of claims 1 to 12 is implemented.
